Europäisches Patentamt

(19) European Patent Office

Office européen des brevets

(11) Publication number: **0 313 523 B1**

(12) **EUROPEAN PATENT SPECIFICATION**

(45) Date of publication of patent specification :
18.09.91 Bulletin 91/38

(21) Application number: **88830383.1**

(22) Date of filing: **20.09.88**

(51) Int. Cl.⁵: **A01F 12/52, A01D 41/12**

(54) **A combine harvester with a device for the checking, from the driving seat, of the product which is recycled to the threshing unit of the harvester for a second threshing.**

(30) Priority: 25.09.87 IT 6781487

(43) Date of publication of application :
26.04.89 Bulletin 89/17

(45) Publication of the grant of the patent :
18.09.91 Bulletin 91/38

(84) Designated Contracting States :
DE ES FR GB

(56) References cited :
EP-A- 0 180 660
BE-A- 733 346
DE-U- 1 998 715
GB-A- 1 143 464
US-A- 3 507 287
US-A- 3 515 144

(56) References cited :
POWER FARMING, vol. 63, no. 10, October
1984, pages U10-U11, Surrey, GB; "Super
sample combines"
LANDBOUW-MECHANISATIE, vol. 19, no. 9,
September 1968, pages 847-848; "Van de
praktijk voor de praktijk"

(73) Proprietor : FIATGEOTECH - TECNOLOGIE
PER LA TERRA S.p.A.
Viale delle Nazioni, 55
I-41100 Modena (IT)

(72) Inventor : Raineri, Giuseppe
Via San Cristoforo 25
I-36061 Bassano Del Grappa Vicenza (IT)
Inventor : Scalabrin, Giorgio
Via S. Bortolo, 37
I-36030 Fara Vicentino Vicenza (IT)

(74) Representative : Notaro, Giancarlo et al
c/o Jacobacci-Casetta & Perani S.p.A. Via
Alfieri, 17
I-10121 Torino (IT)

## Description

The present invention relates to combine harvesters, particularly of the type including a thresher unit for threshing the crop harvested by the harvester, a winnowing unit for winnowing the threshed crop, separating the grain from the material to be discarded and recovering material which needs a second threshing, and conveyor means for carrying the material recovered from the winnowing unit to the input of the threshing unit see e.g. BE-A-733346 and GB-A-1143464.

Whilst the machine is operating, it is important for the operator to be able to check the operations performed by the various parts of the machine quickly and safely so that he can carry out the necessary adjustments immediately if any component is not working in the optimum manner.

In particular, it is desirable for the operator to check the recovered material which is recycled to the threshing unit of the harvester for a second threshing. It is from this check, in fact, that useful information is derived on the quality of working of the winnowing unit which enables the necessary adjustments to be effected promptly in the event of incorrect operation. For example, an excessive quantity of grain in the recovered material indicates that the winnowing unit is not separating correctly.

The object of the invention is to produce a combine harvester in which the operator can check the recovered material simply, conveniently and safely without moving from the driving seat.

The invention achieves this object by virtue of the fact that the conveyor means are provided with a door which can be operated from the driving seat and which enables the flow of recovered material to be discharged temporarily on to the ground in a position which is visible from the driving seat.

According to a further characteristic, the door is movable between a closed position, in which it allows the regular supply of the material to the thresher unit, and an open position in which it enables the recovered material to be supplied to an auxiliary duct which discharges it on to the ground. This auxiliary duct has a flat lower slip wall which makes the material spread out and slide downwardly at a speed which enables all its constituents to be seen clearly.

When the door is opened by the operator, the recovered material is discharged on to the ground and enables the operator to carry out the check himself. Naturally, the door is left open only for the time which is strictly necessary for effecting the check in order to avoid a not inconsiderable loss of grain. As a result of this check, the operator can, when necessary, effect any appropriate adjustments to the winnowing unit.

In a preferred embodiment, the door is biassed into the closed position by resilient means and can be opened by means of a flexible cable. The resilient means preferably act on the door through a lever transmission which has a dead point in an intermediate position of the door, between the closed and open positions. This prevents the door from being opened accidentally, causing an undesirable loss of grain.

Further characteristics and advantages of the invention will become clear from the description which follows with reference to the appended drawings, provided purely by way of non-limiting example, in which:

Figure 1 is a schematic, sectioned side-elevational view of a combine harvester according to the invention,

Figure 2 is a sectional view of a detail of the harvester of Figure 2 on an enlarged scale, in accordance with a first embodiment of the invention,

Figure 3 illustrates the detail of Figure 2 in a different operative condition,

Figure 4 illustrates a variant of Figure 2, and

Figure 5 is a section taken on the line V-V of Figure 4.

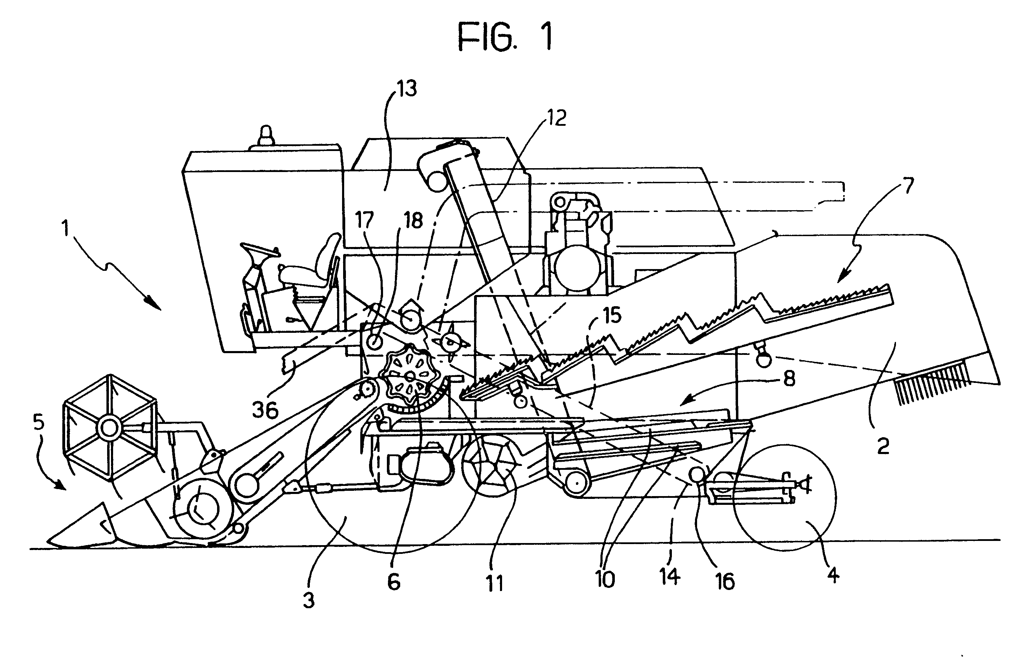

Figure 1 illustrates a combine harvester 1 having a structure 2 provided with front wheels 3 and rear wheels 4. According to convention in the art, the machine 1 has a cutting platform 5 which collects the harvested crop and supplies it to a threshing unit 6. The waste product output by the threshing unit 6 is supplied to a shaker unit 7 which then discharges it on to the ground. The grain output by the thresher unit 6 and the shaker unit 7, however, is supplied to a winnowing unit 8 including two screens 10 spaced apart one above the other, and a fan 11 which directs a jet of air against the material falling through the winnowing screens 10. The lighter, waste material is conveyed by the flow of air towards the rear of the harvester and is discharged on to the ground. The grain is conveyed by an elevator device 12 into the tank 13 of the machine. Finally, the lighter material which is not discharged on to the ground is recovered by a wall 14 and conveyed to the input of the thresher unit 6 for a second threshing by means of an elevator device 15. The material which collects on the wall 14 is conveyed to the lower, loading end of the elevator device 15 by a screw feeder 16. The upper end of the elevator device 15 discharges the recovered material into a duct 17 arranged transverse the direction of travel of the harvester. The duct 17 has an aperture (not illustrated) for discharging the recovered material on to the threshing unit. A screw feeder 18, moreover, is provided in correspondence with this duct for delivering the material.

In conventional manner, the elevator device 15 comprises a sheet-metal casing 19 having an inner sheet-metal wall 20 which divides the interior of the casing 15 into an upper duct and a lower duct.

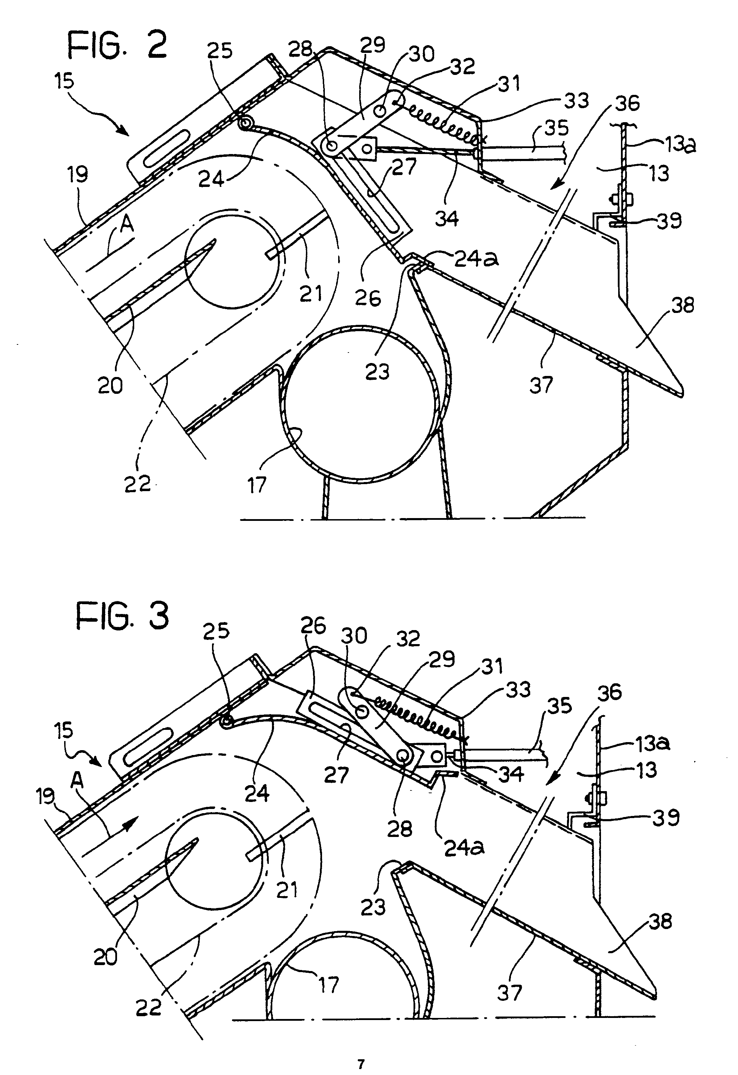

A series of blades 21, for example, of rubberised textile or plastics material (only one of these blades is illustrated schematically in Figure 2), travel through these ducts. The blades 21 are carried by an endless chain 22 which is situated within the casing 15. The chain 22 is also illustrated only schematically by a broken line in the appended drawings. The structural details of the elevator device 15 are not illustrated since, as already stated, this device is of known type and does not fall within the scope of the present invention.

When the harvester is operating normally, the recovered material moves upwardly in the elevator device 15 following the upper duct thereof (the chain 22 moves in the direction indicated by the arrow A in Figure 2) and is projected by the blades 21 into the duct 17 from which it is then discharged above the thresher unit. The casing 19 of the elevator device 15 has an aperture 23 provided with a door 24 facing the discharge end of the device. The door 24 is constituted by a sheet-metal wall having an edge defining an eyelet which enables the door 24 to be articulated to the fixed structure of the harvester by means of an articulation pin 25. A right-angled bracket 26 is welded to the outer surface of the door 24 and has a flange perpendicular to the door 24 which is provided with a slot 27. A pin 28 carried by one end of a rocker lever 29 is slidably engaged in the slot 27. The lever 29 is pivotably supported on the fixed structure of the harvester by means of a pin 30. A helical spring 31 is interposed between the opposite end 32 of the lever 29 and a sheet-metal cover 33 which is fixed to the structure. The spring 31 urges the lever 29 into the position illustrated in Figure 2, which corresponds to closure of the door 24. The door can be opened by the operator by means of a flexible cable 34 whose end is anchored to the pin 28 and which has a sheath 35 fixed to the cover 33. When the cable 34 is pulled, the lever 29 is moved into the position illustrated in Figure 3 against the action of the spring 31. This causes the pin 28 to slide in the slot 27 and the door 24 to open. In moving from the position in which the door is closed to the position in which the door is open, the lever 29 passes a dead point. This avoids any possibility of the door opening accidentally due to the pressure exerted by the material leaving the elevator device. When the door is open, it puts the interior of the elevator device 15 into communication with a discharge duct 36 which is made of sheet metal and has a lower slip plane 37. The duct 36 passes through the wall 13a of the tank 13 and ends in a discharge spout 38 from which the material is discharged on to the ground. A rubber wall 39 is provided in correspondence with the aperture in the wall 13a through which the discharge duct 36 passes to prevent any leakage of the grain present in the tank through the space between the edge of the aperture in the wall 13a and the wall of the duct 36.

When the door is closed, its edge 24a abuts the wall 37. When the operator wishes to check the recovered material, he opens the door by means of the flexible cable 34. When the door is open (Figure 3), it allows the flow of recovered material to be thrown by the blades 21 into the duct 36. The slip plane 37 makes the recovered material spread out and slide downwards at a speed which enables all its constituents to be seen clearly. Naturally, the operator keeps the door open only for the time necessary to carry out the check. When the check has been effected, the flexible cable 34 is released to enable the door to return to the closed position under the action of the spring 31. As already indicated, the lever transmission 29 enables any risk of accidental opening of the door to be avoided.

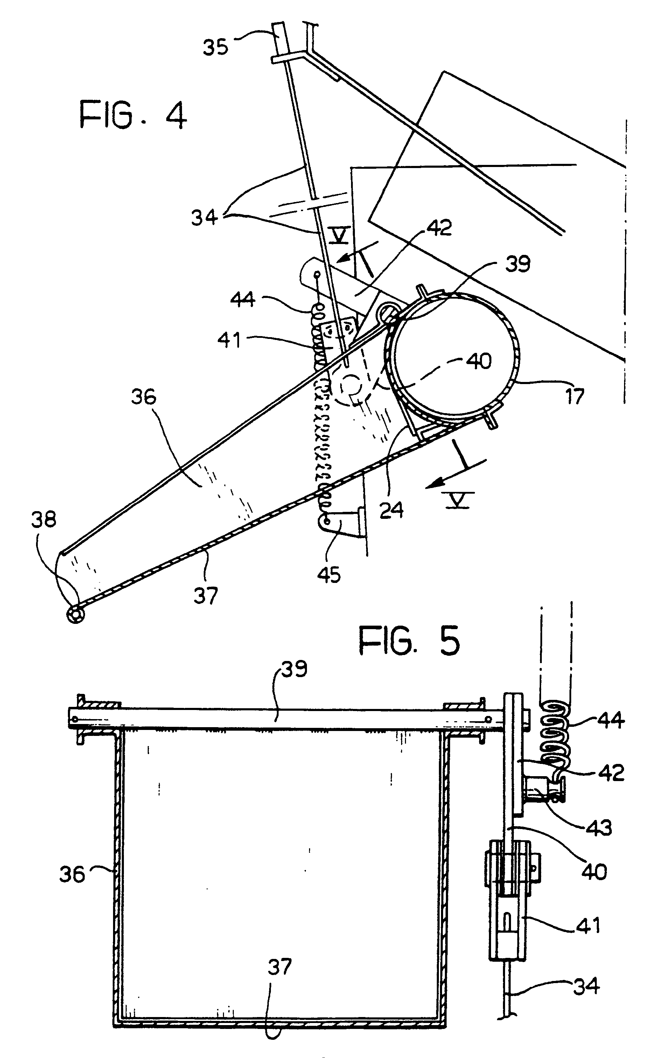

Figure 4 shows a variant of the invention which differs from that of Figures 2 and 3 mainly in that the door 24 is provided in the transverse duct 17 instead of at the discharge end of the elevator device 15. The door 24 is carried by a pin 39 which is articulated to the structure of the duct 17 and is connected at one end to a crank 40. The latter is, in turn, connected to a lever 41 to which the end of the flexible cable 34 is fixed. An arm 42 is also fixed to the pin 39 and ends in a pin 43 (Figure 5). The resilient means for biassing the door into the closed position are constituted by a helical spring 44 interposed between the pin 43 and a bracket 45 fixed to the fixed structure of the harvester. In its open position, the door allows the material to be discharged into the discharge duct 36 which has the lower slip plane 37 ending at the bottom in the spout 38.

## Claims

1. A combine harvester, comprising a thresher unit (6) for threshing the crop harvested by the harvester, a unit (8) for winnowing the threshed crop, separating the grain from the material to be discarded and recovering material which needs a second threshing, and conveyor means (15, 17) for carrying the material recovered from the winnowing unit (8) to the input of the threshing unit (6), characterised in that the conveyor means are provided with a door (24) which can be operated from the driving seat, and which enables the flow of recovered material to be discharged temporarily on to the ground in a position which is visible from the driving seat.

2. A combine harvester according to Claim 1, characterised in that the door (24) is movable between a closed position in which it allows the regular supply of the recovered material to the thresher unit (6) and an open position in which it allows the recovered material to be supplied to an auxiliary duct (36) having a lower slip plane (37) for discharging the product on to the ground.

3. A combine harvester according to Claim 2, characterised in that the door (24) is biassed into its closed position by resilient means (31, 44) and can be opened by means of a flexible cable (34).

4. A combine harvester according to Claim 3, characterised in that the resilient means are connected to the door (24) by means of a lever transmission which has a dead point in correspondence with a position of the door intermediate its closed position and its open position.

5. A combine harvester according to Claim 4, in which the conveyor means include a bladed elevator device (15) having an upper end for discharging the material to be conveyed to the thresher unit, characterised in that the door (24) is arranged in a position facing the said discharge end.

6. A combine harvester according to Claim 5, characterised in that the door (24) is articulated to the fixed structure of the harvester and in that the flexible cable (34) is connected to a pin (28) which is slidably mounted in a slot (27) formed in a bracket (26) fixed to the door (24).

7. A combine harvester according to Claim 6, characterised in that the pin (28) to which the flexible cable (34) is anchored is carried by one end of a rocker lever (29) pivotally mounted on the fixed structure of the harvester and having its opposite end connected by means of a helical spring (31) to the fixed structure of the harvester.

8. A combine harvester according to Claim 4, in which the conveyor means include a bladed elevator device (15) having an upper discharge end for the material and a transverse duct (17) which receives the product from the elevator device and delivers it to the thresher unit, characterised in that the door (24) is situated in the wall of the transverse duct (17).

9. A combine harvester according to Claim 8, characterised in that the door (24) is fixed to a pin (39) rotatable on the fixed structure of the harvester and carrying a crank (40) which can be operated by the flexible cable (34), the resilient means being constituted by a helical spring (44) interposed between the fixed structure of the machine and an arm (42) fixed to the crank (40).

**Patentansprüche**

1. Mähdrescher mit einer Dreschereinheit (6) zum Dreschen des von der Erntemaschine geernteten Getreides, einer Einheit (8) zur Reinigung des gedroschenen Getreides, Trennung des Korns von dem zu beseitigenden Material und Wiedergewinnung von ein zweites Dreschen benötigendem Material, und einer Transporteinrichtung (15, 17) zum Bringen des von der Reinigungseinheit (8) wiedergewonnenen Materials zum Eingang der Drescheinheit (6), **dadurch gekennzeichnet**, daß die Transporteinrichtung mit einem von einem Fahrersitz aus betätigbaren Tor (24) versehen ist, mittels welchem die Menge wiedergewonnenen Materials zeitweilig an einer vom Fahrersitz aus sichtbaren Stelle auf dem Boden abgeladen werden kann.

2. Mähdrescher nach Anspruch 1, **dadurch gekennzeichnet**, daß das Tor (24) zwischen einer geschlossenen Stellung, in welcher es die reguläre Zufuhr des wiedergewonnenen Materials zur Drescheinheit (6) zuläßt, und einer offenen Stellung, in welcher es dem wiedergewonnenen Material erlaubt, einen Hilfskanal (36) mit einer unteren Gleitfläche (37) zum Abladen des Produkts auf dem Boden zugeführt zu werden, bewegbar ist.

3. Mähdrescher nach Anspruch 2, **dadurch gekennzeichnet**, daß das Tor (24) mittels einer elastischen Einrichtung (31, 44) in Richtung zu seiner geschlossenen Stellung vorbelastet ist und mittels eines flexiblen Seils (34) geöffnet werden kann.

4. Mähdrescher nach Anspruch 3, **dadurch gekennzeichnet**, daß die elastische Einrichtung mittels einer einen Totpunkt in Übereinstimmung mit einer Stellung des Tores (24) zwischen dessen geschlossener und offener Stellung aufweisenden Hebelübersetzung mit dem Tor (24) verbunden ist.

5. Mähdrescher nach Anspruch 4, wobei die Transporteinrichtung eine blattaufweisende Hebeeinrichtung (15) mit einem oberen Ende zur Abgabe des zu transportierenden Materials an die Drescheinheit aufweist, **dadurch gekennzeichnet**, daß das Tor (24) an einer dem Abgabeende gegenüberliegenden Stelle angeordnet ist.

6. Mähdrescher nach Anspruch 5, **dadurch gekennzeichnet**, daß das Tor (24) an dem festen Aufbau der Erntemaschine angelenkt ist, und daß das flexible Seil (34) mit einem Bolzen (28) verbunden ist, der in einem Schlitz (27), welcher in einem am Tor (24) befestigten Träger (26) ausgebildet ist, gehalten ist.

7. Mähdrescher nach Anspruch 6, **dadurch gekennzeichnet**, daß der Bolzen (28), an dem das flexible Seil (34) verankert ist, von einem Ende eines drehbar an dem festen Aufbau der Erntemaschine befestigten Kipphebels (29) gehalten ist, dessen entgegengesetztes Ende mittels einer Schrauben- oder Spiralfeder (31) mit dem festen Aufbau der Erntemaschine verbunden ist.

8. Mähdrescher nach Anspruch 4, wobei die Transporteinrichtung eine blattaufweisende Hebeeinrichtung (15) mit einem oberen Abgabeende für das Material und einen Querkanal (17) zur Aufnahme des Produkts von der Hebeeinrichtung und Abgabe des Produkts an die Dreschereinheit aufweist, **dadurch gekennzeichnet**, daß das Tor (24) in der Wand des Querkanals (17) angeordnet ist.

9. Mähdrescher nach Anspruch 8, **dadurch gekennzeichnet**, daß das Tor (24) an einem Bolzen (39) drehbar am festen Aufbau der Erntemaschine befestigt ist und eine durch ein flexibles Seil (34) betätigbare Kurbel (40) hält, wobei die elastische Einrichtung durch eine zwischen dem festen Aufbau der Maschine und einem an der Kurbel (40) befestigten Arm (42) angeordnete Schraubenfeder (44) gebildet ist.

## Revendications

1. Moissonneuse-batteuse comprenant une unité de battage (6) servant à battre la récolte moissonnée par la moissonneuse, une unité (8) servant à vanner la récolte battue, à séparer le grain de la matière à rejeter et à récupérer la matière qui requiert un deuxième battage, et des moyens transporteurs (15, 17) servant à transporter la matière récupérée de l'unité de vannage (8) à l'entrée de l'unité de battage (6), caractérisée en ce que les moyens transporteurs sont équipés d'une porte (24) qui peut être manoeuvrée du siège du conducteur, et qui permet de décharger temporairement sur le sol le flux de matière récupérée, en un point qui est visible du siège du conducteur.

2. Moissonneuse-batteuse selon la revendication 1, caractérisée en ce que la porte (24) peut être déplacée entre une position fermée, dans laquelle elle permet l'approvisionnement normal en matière récupérée de l'unité de battage (6), et une position ouverte, dans laquelle elle permet à la matière récupérée d'être envoyée à un conduit auxiliaire (36) équipé d'un plan inférieur (37) formant glissière servant à décharger le produit sur le sol.

3. Moissonneuse-batteuse selon la revendication 2, caractérisée en ce que la porte (24) est rappelée à sa position fermée par des moyens élastiques (31, 44) et peut être ouverte à l'aide d'un câble flexible (34).

4. Moissonneuse-batteuse selon la revendication 3, caractérisée en ce que les moyens élastiques sont reliés à la porte (24) par une tringlerie à levier qui possède un point mort qui coïncide avec une position de la porte qui est intermédiaire entre sa position fermée et sa position ouverte.

5. Moissonneuse-batteuse selon la revendication 4, dans laquelle les moyens transporteurs comprennent un dispositif élévateur à palettes (15) possédant une extrémité supérieure servant à décharger la matière qui doit être transférée à l'unité de battage, caractérisée en ce que la porte (24) est agencée dans une position qui fait face à ladite extrémité de décharge.

6. Moissonneuse-batteuse selon la revendication 5, caractérisée en ce que la porte (24) est articulée sur la structure fixe de la moissonneuse et en ce que le câble flexible (34) est relié à une broche (28) qui est montée coulissante dans une fente (27) formée dans une ferrure (26) fixée à la porte (24).

7. Moissonneuse-batteuse selon la revendication 6, caractérisée en ce que la broche (28) à laquelle le câble flexible (34) est ancré est portée par une extrémité d'un levier oscillant (29) qui est monté pivotant sur la structure fixe de la moissonneuse et dont l'extrémité opposée est reliée à la structure fixe de la moissonneuse au moyen d'un ressort hélicoïdal (31).

8. Moissonneuse-batteuse selon la revendication 4, dans laquelle les moyens transporteurs comprennent un dispositif élévateur à palettes (15) possédant une extrémité de déchargement supérieure pour la matière et un conduit transversal (17) qui reçoit le produit en provenance du dispositif élévateur et le distribue dans l'unité de battage, caractérisée en ce que la porte (24) est située dans la paroi du conduit transversal (17).

9. Moissonneuse-batteuse selon la revendication 8, caractérisée en ce que la porte (24) est fixée à une broche (39) qui peut tourner sur la structure fixe de la moissonneuse et qui porte une manivelle (40) qui peut être actionnée par un câble flexible (34), les moyens élastiques étant constitués par un ressort hélicoïdal (44) interposé entre la structure fixe de la machine et un bras (42) fixé à la manivelle (40).

# FIG. 1

EP 0 313 523 B1

FIG. 2

FIG. 3

FIG. 4

FIG. 5